# EUROPEAN PATENT APPLICATION

(11) **EP 4 571 390 A1**
(43) Date of publication of application: **18.06.2025**
(21) Application number: 23830010.7
(22) Date of filing: 16.06.2023
(51) Int. Cl.: G02B 27/01, G02B 6/124

(54) **DIFFRACTIVE OPTICAL WAVEGUIDE STRUCTURE, OPTICAL APPARATUS, AND NEAR-EYE DISPLAY DEVICE**

(30) Priority: 28.06.2022 CN 202210740859
(71) Applicant: Meta-Bounds Inc., Zhuhai, Guangdong 519085 (CN)
(72) Inventor: LAN, Fuyang, Zhuhai, Guangdong 519085 (CN); GUAN, Jian, Zhuhai, Guangdong 519085 (CN); ZHOU, Xing, Zhuhai, Guangdong 519085 (CN); SHAO, Chendi, Zhuhai, Guangdong 519085 (CN)
(74) Representative: Agca Kizil, Tugce
(86) International application number: PCT/CN2023/100751
(87) International publication number: WO 2024/001830

(57) **Abstract**

Embodiments of the present disclosure provide a diffraction optical waveguide structure (100), an optical apparatus, and a near-eye display device. The diffraction optical waveguide structure (100) includes a light-guiding layer (110), a coupling-in region (120), a deflecting region (130) and a coupling-out region (140). The coupling-in region (120), the deflecting region (130) and the coupling-out region (140) are sequentially arranged along a direction of an optical path. The coupling-in region (120), the deflecting region (130) and the coupling-out region (140) are all configured with a first diffractive microstructure layer (150). The diffraction optical waveguide structure (100) includes a light-homogenizing region (160) arranged between the deflecting region (130) and the coupling-out region (140). The light-homogenizing region (160) is configured with a second diffractive microstructure layer (170) configured to spatially redistribute energy of lights to enhance the uniformity and brightness of the lights emitted from the coupling-out region (140).

## Description

This Application is a National Stage of International Application No. PCT /CN2023/100751, filed on Jun. 16, 2023, which claims the benefit of priority to Chinese Application No. 202210740859.0, filed on Jun. 28, 2022, both of which are incorporated by reference herein.

### Technical Field

The present disclosure relates to the technical field of optical technology, and in particularly to a diffraction optical waveguide structure, an optical apparatus and a near-eye display device.

### Background Art

An optical waveguide is a device capable of confining a signal light within its structure and propagating the signal light along a specific direction, while the optical waveguide exhibits good light transmission. Based on these characteristics, the optical waveguide can be used as a display of an augmented reality (AR) near-eye display device. The optical waveguide directionally propagates signal light emitted from a projection optical machine to human eyes, so the human eyes may observe an displayed image. Furthermore, due to the optical waveguide exhibits good light transmission, the human eyes may also clearly perceive real environment behind the optical waveguide. Therefore, what the human eyes ultimately observes is a fusion of the displayed image and the real environment.

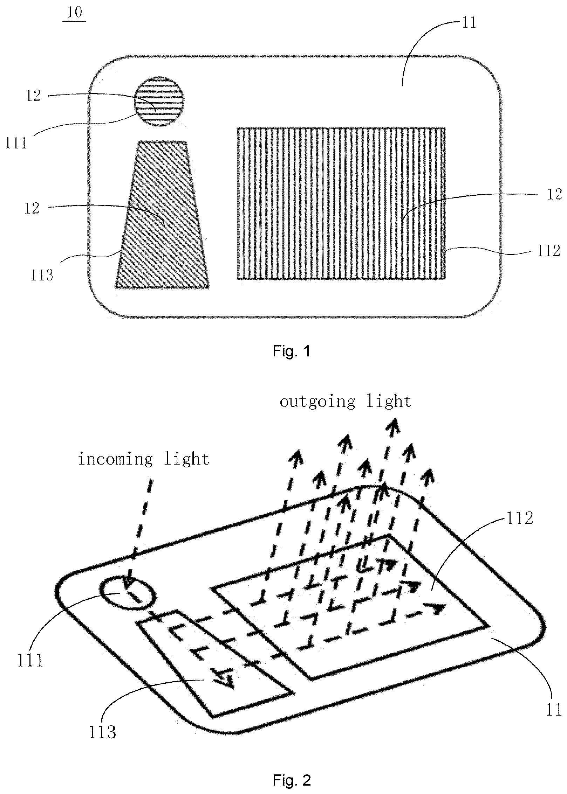

The optical waveguide may be categorized into different types, such as a geometric optical waveguide, a diffractive optical waveguide, according to different implementation principles. Since a diffractive optical waveguide is thin, lightweight and has good light transmission, the diffractive optical waveguide gradually becomes a preferred solution of the display of the augmented reality (AR) near-eye display device. Referring to FIG. 1, the diffractive optical waveguide 10 includes a waveguide layer 11 and a diffractive microstructure layer 12 located on a surface of the waveguide layer 11. On a surface of the waveguide layer 11, a region close to a projection optical machine is a coupling-in region 111, and a region close to human eyes is a coupling-out region 112. There may be a deflecting region 113 positioned between the coupling-in region 111 and the coupling-out region 112. Diffractive microstructures of the coupling-in region 111, the deflecting region 113 and the coupling-out region 112 may be located on the same surface of the waveguide layer 11, or be located on two different surfaces of the waveguide layer 11. As shown in FIG. 1, the diffractive microstructures of the coupling-in region 111, the deflecting region 113 and the coupling-out region 112 of the diffractive optical waveguide 10 are all located on the same surface of the waveguide layer 11.

The diffractive microstructure of the coupling-in region 111 utilizes diffraction of light to couple part of signal lights emitted from an optical machine into the waveguide layer 11. The diffractive microstructures of the deflecting region 113 and the coupling-out region 112 utilize the diffraction of light to split and expand a beam of light propagated within the deflecting region 113 and the coupling-out region 112 in two dimensions, so that a beam of light incident from the coupling-in region 111 will be expanded into more than one light beam after being propagated and coupled out through the diffractive optical waveguide, namely exit pupil expansion. Referring to FIG. 2, in light propagation process, for an optical waveguide with the deflecting region 113, more than one light beam is propagated in the waveguide layer 11 and pass through the deflecting region 113, then more than one light beam is propagated to the coupling-out region 112 through total internal reflection. The diffractive microstructure layer of the coupling-out region 112 utilizes the diffraction of light to couple lights propagated in the waveguide layer 11 out of the waveguide layer 11. The lights coupled out of the waveguide layer 11 are incident to the human eyes, forming an image 20 to be displayed on a retina.

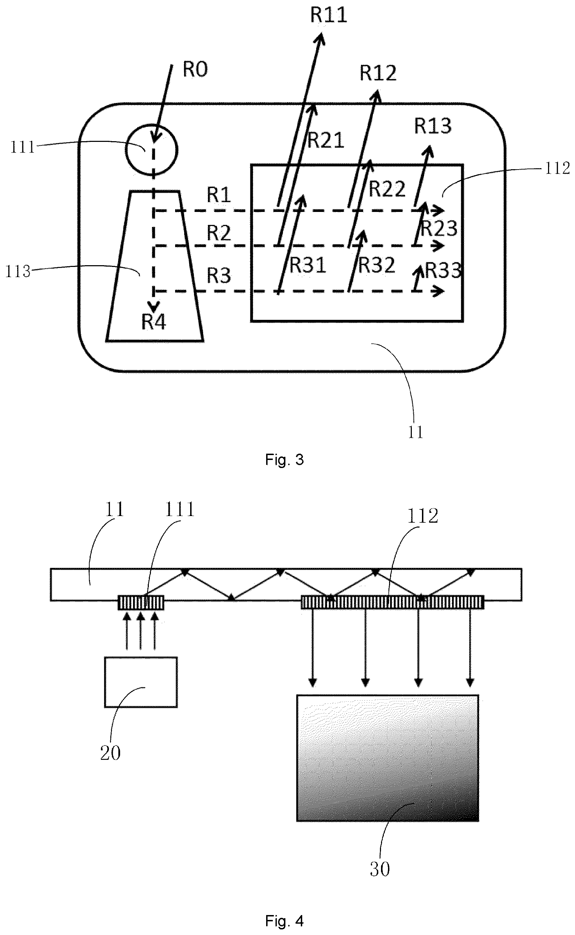

For lights with a particular propagation angle and a diffractive microstructure with a constant period, diffraction efficiency of the diffractive microstructures of the deflecting region 113 and the coupling-out region 112 is constant, which results in attenuation of energy of lights during beam splitting propagation process. Referring to FIG. 3, R0 represents an incident signal light, assuming that energy of the incident signal light is 1, and first-order diffractive efficiency of the diffractive microstructure of the deflecting region 113 to the light is α(α<1), energy of a deflecting light R1, a deflecting light R2 and a deflecting light R3 are respectively α, (1-α) α and (1-α) 2α, indicating that energy of deflecting light R1, deflecting light R2 and deflecting light R3 are decreasing. Similarly order-specific diffraction efficiency of an outgoing light corresponding to the diffractive microstructure of the coupling-out region 112 is β(β<1), then energy of a coupling-out light R11, R12 and R13 are respectively αβ, α(1-β) and α(1-β)2β, energy of coupling-out light R11, coupling-out light R12 and coupling-out light R13 are decreasing. In FIG. 3, relative energy levels of all coupling-out lights are represented by lengths of the lights, showing a trend of attenuation from an upper left corner of the coupling-out region 112 to a lower right corner of the coupling-out region 112, which will lead to a problem of non-uniform brightness when the waveguide displays an image 30 (referring to FIG. 4).

### Summary of the Invention

The purpose of the present disclosure is to provide a diffraction optical waveguide structure, an optical apparatus, and a near-eye display device to solve the technical problem that brightness is not uniform when a waveguide displays images.

In order to achieve the above purpose, the technical solution of the present disclosure is as follows.

According to a first aspect of the present invention, a diffraction optical waveguide structure is provided. The diffraction optical waveguide structure includes a light-guiding layer, and a coupling-in region, a deflecting region, and a coupling-out region all disposed on the light-guiding layer and sequentially arranged along a direction of an optical path. The coupling-in region, the deflecting region and the coupling-out region are all configured with a first diffractive microstructure layer. The diffraction optical waveguide structure further includes light-homogenizing region, the light-homogenizing region is arranged between the deflecting region and the coupling-out region. The light-homogenizing region is configured with a second diffractive microstructure layer, the second diffractive microstructure layer is configured to spatially redistribute energy of lights to enhance uniformity and brightness of the lights emitted from the coupling-out region.

Optionally, the light-homogenizing region is a region enclosed by straight edges; or, the light-homogenizing region is a region enclosed by curved edges.

Optionally, the light-homogenizing region includes more than one sub-light-homogenizing region, more than one sub-light-homogenizing region is disposed at intervals, and a distance between two adjacent sub-light-homogenizing regions is less than or equal to 30mm.

Optionally, the light-homogenizing region is configured with one or more hole regions, a hole size of the hole region is less than or equal to 30mm.

Optionally, the light-homogenizing region is arranged on the same side as the coupling-in region, the deflecting region , and the coupling-out region.

Optionally, the light-homogenizing region is disposed between the deflecting region and the coupling-out region, the light-homogenizing region is adjacent to the deflecting region and the coupling-out region;
or, the light-homogenizing region is disposed between the deflecting region and the coupling-out region, the light-homogenizing region is spaced apart from the deflecting region and the coupling-out region, a distance between the light-homogenizing region and the deflecting region is less than or equal to 40mm, and a distance between the light-homogenizing region and the coupling-out region is less than or equal to 40mm;
or, the light-homogenizing region is disposed between the deflecting region and the coupling-out region, the light-homogenizing region is adjacent to the deflecting region, the light-homogenizing region is spaced apart from the coupling-out region, and a distance between the light-homogenizing region and the coupling-out region is less than or equal to 40mm;
or, the light-homogenizing region is disposed between the deflecting region and the coupling-out region, the light-homogenizing region is adjacent to the coupling-out region, the light-homogenizing region is spaced apart from the deflecting region, a distance between the light-homogenizing region and the deflecting region is less than or equal to 40mm.

Optionally,, at least one of the light-homogenizing region, the coupling-in region, the deflecting region, and the coupling-out region is arranged on a different side from remaining others.

Optionally, the light-homogenizing region is disposed between the deflecting region and the coupling-out region, the light-homogenizing region is adjacent to the deflecting region and the coupling-out region in an axial direction;
or, the light-homogenizing region is disposed between the deflecting region and the coupling-out region, the light-homogenizing region is spaced apart from the deflecting region and the coupling-out region in an axial direction, a distance between the light-homogenizing region and the deflecting region is less than or equal to 40mm, and a distance between the light-homogenizing region and the coupling-out region is less than or equal to 40mm;
or, the light-homogenizing region is disposed between the deflecting region and the coupling-out region, the light-homogenizing region is adjacent to the deflecting region in an axial direction, the light-homogenizing region is spaced apart from the coupling-out region in an axial direction, and a distance between the light-homogenizing region and the coupling-out region is less than or equal to 40mm;
or, the light-homogenizing region is disposed between the deflecting region and the coupling-out region, the light-homogenizing region is adjacent to the coupling-out region in an axial direction, the light-homogenizing region is spaced apart from the deflecting region in an axial direction, and a distance between the light-homogenizing region and the deflecting region is less than or equal to 40mm;
or, the light-homogenizing region is disposed between the deflecting region and the coupling-out region, and the light-homogenizing region overlaps with at least one of the deflecting region and the coupling-out region in an axial direction.

According to a first aspect of the present invention, an optical apparatus is provided. The optical apparatus includes a micro-image source and the above-mentioned diffraction optical waveguide structure.

According to a first aspect of the present invention, a near-eye display device is provided. The near-eye display device includes the above-mentioned optical apparatus.

In the diffraction optical waveguide structure, an optical apparatus and a near-eye display device of the present disclosure, a light-homogenizing region is arranged between a deflecting region and a coupling-out region, lights output from the deflecting region may pass completely or partially through the light-homogenizing region before entering the coupling-out region, and the second diffractive microstructure layer disposed in the light-homogenizing region is configured to spatially redistribute energy of lights, which improves the energy of the outgoing lights propagated from the coupling-out region, so as to improve uniformity and overall brightness of the waveguide display, resulting in a better display effect for the diffraction optical waveguide structure.

### Brief Description of the Drawings

In order to more clearly illustrate the technical solution of the embodiment of the present disclosure, a brief description will be provided below for the drawings. The drawings described below are provided for some embodiments of the present disclosure, and according to such drawings, those having ordinary skilled in the art may obtain other drawings without any creative endeavor.
FIG. 1 is a structural view illustrating a diffraction optical waveguide;
FIG. 2 is a schematic view illustrating optical path propagation process of a diffraction optical waveguide;
FIG. 3 is a schematic view illustrating energy attenuation of a diffractive optical waveguide in beam splitting propagation process;
FIG. 4 is a schematic view illustrating a diffraction optical waveguide, an image displayed by the waveguide exhibits non-uniform brightness;
FIG. 5a is a first schematic view illustrating a diffraction optical waveguide structure according to one embodiment of the present disclosure;
FIG. 5b is a second schematic view illustrating a diffraction optical waveguide structure according to one embodiment of the present disclosure;
FIG. 5c is a third schematic view illustrating a diffraction optical waveguide structure according to one embodiment of the present disclosure;
FIG. 6 is a fourth schematic view illustrating a diffraction optical waveguide structure according to one embodiment of the present disclosure;
FIG. 7 is a fifth schematic view illustrating a diffraction optical waveguide structure according to one embodiment of the present disclosure;
FIG. 8 is a sixth schematic view illustrating a diffraction optical waveguide structure according to one embodiment of the present disclosure;
FIG. 9 is a seventh schematic view illustrating a diffraction optical waveguide structure according to one embodiment of the present disclosure;
FIG. 10 is an eighth schematic view illustrating a diffraction optical waveguide structure according to one embodiment of the present disclosure;
FIG. 11 is a ninth schematic view illustrating a diffraction optical waveguide structure according to one embodiment of the present disclosure;
FIG. 12 is a tenth schematic view illustrating a diffraction optical waveguide structure according to one embodiment of the present disclosure;
FIG. 13 is an eleventh schematic view illustrating a diffraction optical waveguide structure according to one embodiment of the present disclosure.

### List of Reference Signs:

100, diffraction optical waveguide structure; 110, light-guiding layer; 120, coupling-in region; 130, deflecting region; 140, coupling-out region; 150, first diffractive microstructure layer; 160, light-homogenizing region; 161, sub-light-homogenizing region; 162, hole region; 170, second diffractive microstructure layer.

### Detailed Description of Embodiments

To make the objectives, technical solutions, and advantages of the present disclosure clearer and more definite, a detailed description of embodiments of the present disclosure will be further provided below with reference to the attached drawings and embodiments. It is appreciated that the embodiments described herein are provided solely for illustrating the present disclosure and are not to limit the present disclosure.

It is noted that when a component is referred to as being "fixed" or "arranged" on another component, it can be directly set on another component, or it can be indirectly set on another component. When a component is referred to as being "connected" to another component, it can be directly connected to another component or it can be indirectly connected to another component. Terms that indicate directional or positional relationships, such as "up", "down", "left", "right", "front", "back", "vertical", "horizontal", "top", "bottom", "inner", "outer" are based on the directional or positional relationship illustrated in the attached drawings, and are adopted for easily describing the present disclosure, and are not construed as limiting to present technical solutions. Terms "first" and "second" are adopted for easily describing the present disclosure, and are not construed as indicating or implying relative importance or implying the number of technical features. The meaning of "multiple" is two or more, unless otherwise specifically defined.

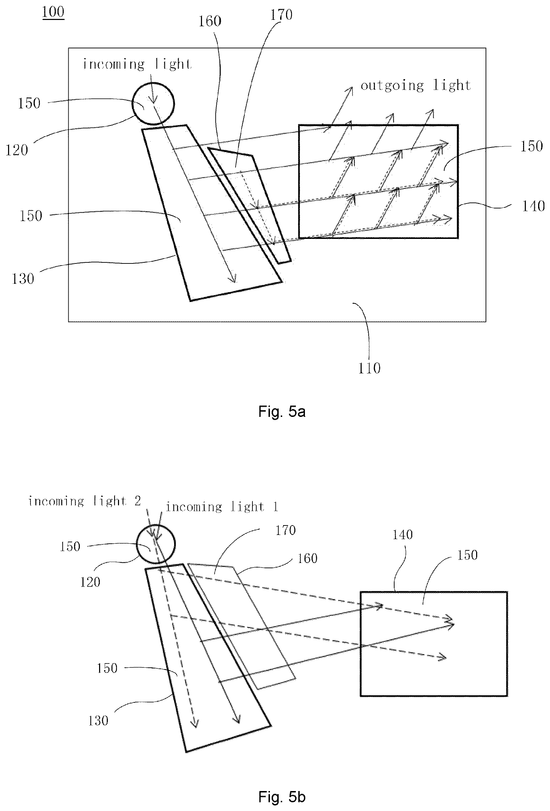

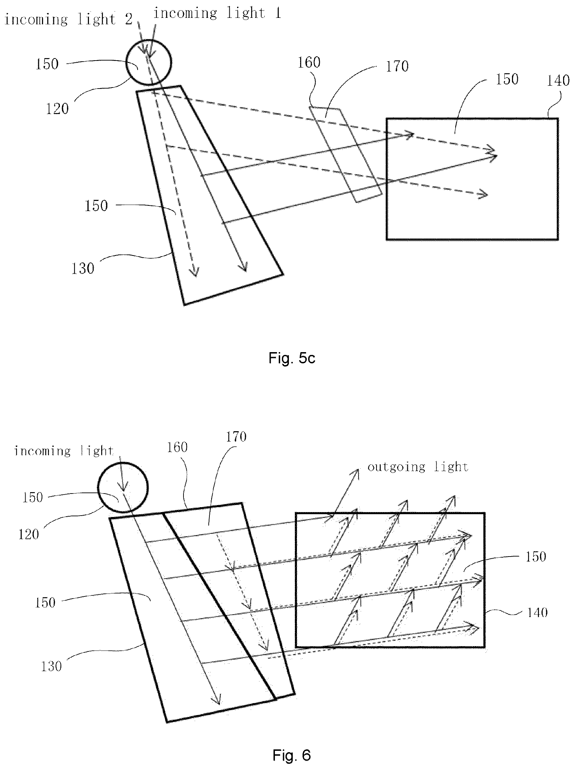

Referring to FIG. 5, one embodiment of the present disclosure provides a diffraction optical waveguide structure 100. The diffraction optical waveguide structure 100 includes a light-guiding layer 110, a coupling-in region 120, a deflecting region 130 and a coupling-out region 140. The coupling-in region 120, the deflecting region 130 and the coupling-out region 140 are all disposed on the light-guiding layer 110, and are sequentially arranged along a direction of an optical path. The coupling-in region 120, the deflecting region 130 and the coupling-out region 140 are all configured with a first diffractive microstructure layer 150. The diffraction optical waveguide structure 100 further includes a light-homogenizing region 160, the light-homogenizing region 160 is arranged between the deflecting region 130 and the coupling-out region 140, the light-homogenizing region 160 is configured with a second diffractive microstructure layer 170. The second diffractive microstructure layer 170 is configured to spatially redistribute energy of lights, in order to enhance the uniformity and brightness of the lights emitted from the coupling-out region 140.

The working principle of the diffraction optical waveguide structure 100 provided in the present embodiment is as follows:
the diffraction optical waveguide structure 100 in the present embodiment is configured with a light-homogenizing region 160 arranged between the deflecting region 130 and the coupling-out region 140. Lights output from the deflecting region 130 may completely or partially pass through the light-homogenizing region 160 before entering the coupling-out region 140, and the second diffractive microstructure layer 170 disposed in the light-homogenizing region 160 is configured to spatially redistribute energy of lights. The specific distribution principle is as follows: a light distribution principle of the light-homogenizing region 160 is the same as that of the deflecting region 130, which are both to make one part of lights incident to a corresponding region propagate along an original path, and the other part of the lights propagate towards a predefined direction. As shown in FIG. 5, the light-homogenizing region 160 distributes incoming lights to a right direction and a lower direction. The presence of both a solid-arrow outgoing light and a dashed-arrow outgoing light at a certain position of the coupling-out region 140 indicates that intensity of the lights at the certain position is enhanced, resulting in increasing a minimum brightness value of the lights in each field of view. It can be seen that the energy of the outgoing lights propagated from the coupling-out region 140 is improved, which improves uniformity and overall brightness of waveguide display, and results in a better display effect for the diffraction optical waveguide structure 100. It should be understood that improving uniformity of the waveguide display refers to making brightness of lights from different incident angles as uniform as possible when the lights reaches human eyes, rather than making the brightness of lights from a single angle uniform at various positions of the coupling-out region 140, and the brightness of the lights is as high as possible.

The diffraction optical waveguide structure 100 provided in the present embodiment has at least the following beneficial effects:
the diffraction optical waveguide structure 100 in the present embodiment is configured with a light-homogenizing region 160 arranged between the deflecting region 130 and the coupling-out region 140, lights output from the deflecting region 130 may pass completely or partially through the light-homogenizing region 160 before entering the coupling-out region 140, and the second diffractive microstructure layer 170 disposed in the light-homogenizing region 160 is configured to spatially redistribute energy of lights, which improves the energy of the outgoing lights propagated from the coupling-out region 140, so as to improve uniformity and overall brightness of the waveguide display, resulting in a better display effect for the diffraction optical waveguide structure 100.

In one embodiment, referring to FIGS. 5-7, the light-homogenizing region 160 is a region enclosed by straight edges. For example: the light-homogenizing region 160 is regularly or irregularly quadrilateral. It should be understood that the light-homogenizing region 160 enclosed by straight edges may also be of other shapes, and is not limited to the above situation, and is not limited herein.

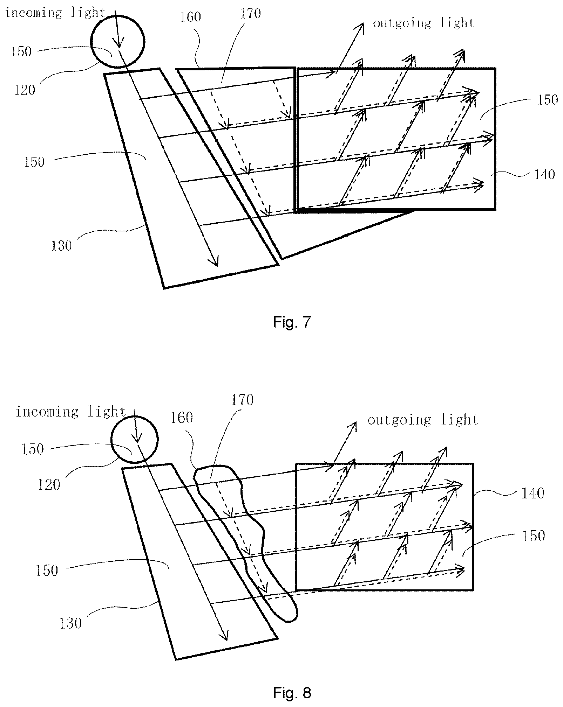

In one embodiment, referring to FIG. 8, the light-homogenizing region 160 is a region enclosed by curved edges. For example: the light-homogenizing region 160 enclosed by the curved edges is at least one of elliptical and cloud-shaped. It should be understood that the light-homogenizing region 160 may also be of other shapes, and is not limited to the above situation, and is not limited herein.

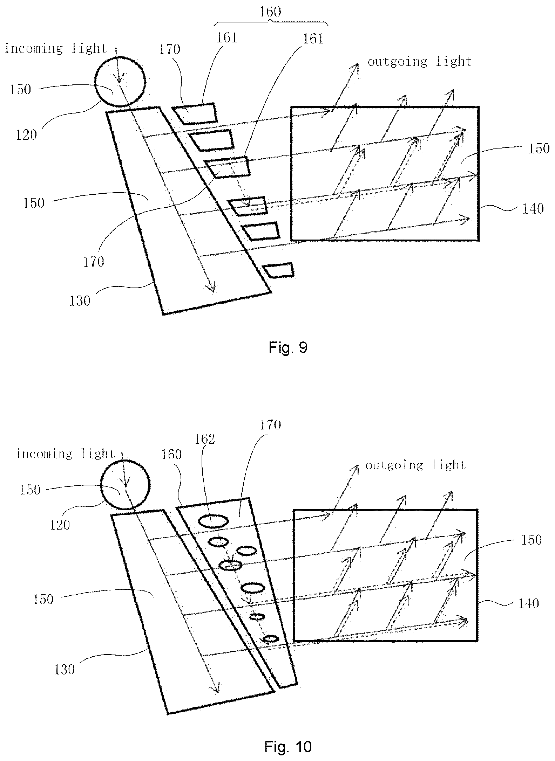

In one embodiment, referring to FIG. 9, the light-homogenizing region 160 includes more than one sub-light-homogenizing region 161, more than one sub-light-homogenizing region 161 is disposed at intervals, and a distance between two adjacent sub-light-homogenizing regions 161 is less than or equal to 30mm. The second diffractive microstructure layer 170 in each sub-light-homogenizing region 161 may have different duty cycles and groove depths, and light diffraction efficiency may be modulated by the different duty cycles and groove depths, resulting in assisting spatial distribution of light energy.

In one embodiment, the light-homogenizing region 160 includes 2 to 10 sub-light-homogenizing regions 161. In one embodiment, the light-homogenizing region 160 includes 6 sub-light-homogenizing regions 161.

In one embodiment, a distance between two adjacent sub-light-homogenizing regions 161 ranges from 5mm to 25mm. In one embodiment, the distance between two adjacent the sub-light-homogenizing regions 161 is 5mm. In one embodiment, the distance between two adjacent sub-light-homogenizing regions 161 is 10mm. In one embodiment, the distance between two adjacent sub-light-homogenizing regions 161 is 25mm.

It should be understood that the number of the sub-light-homogenizing regions 161 in the light-homogenizing region 160, as well as the distance between two adjacent sub-light-homogenizing regions 161 is not limited to the above situation, and may also be other situations, which are not limited herein.

In one embodiment, referring to FIG. 10, the light-homogenizing region 160 is configured with one or more hole regions 162, and a hole size of the hole region 162 is less than or equal to 30mm. It should be understood that a second diffractive microstructure layer 170 is configured in a region other than the hole region 162 of the light-homogenizing region 160, that is, the second diffractive microstructure layer 170 is not configured in the hole region 162. Lights undergo total internal reflection in the hole region 162 of the light-homogenizing region 160, without changing propagation direction and energy. The lights are diffracted in a region other than the hole region 162, and a portion of the light energy is propagated to other directions to participate in energy redistribution. These two modes in the light-homogenizing region 160 are combined together to provide more freedom for spatial redistribution of energy, and achieve a better display effect for the diffraction optical waveguide structure 100 when structure of the light-homogenizing region 160 is configured with a large number of fine hole regions 162.

In one embodiment, the light-homogenizing region 160 is configured with more than one hole region 162, shapes and sizes of more than one hole region 162 may be the same or different, and there are no limitations herein.

In one embodiment, the hole size of the hole region 162 ranges from 5mm to 25mm. In one embodiment, the hole size of the hole region 162 is 5mm. In one embodiment, the hole size of the hole region 162 is 10mm. In one embodiment, the hole size of the hole region 162 is 25mm. It should be understood that the hole size of the hole region 162 is not limited to the above situation, but may be other situations, and there is no limitations herein.

In one embodiment, the light-homogenizing region 160 is arranged on the same side as the coupling-in region 120, the deflecting region 130, and the coupling-out region 140.

In one embodiment, the light-homogenizing region 160 is disposed between the deflecting region 130 and the coupling-out region 140. The light-homogenizing region 160 is adjacent to the deflecting region 130 and the coupling-out region 140. That is, a distance between the light-homogenizing region 160 and the deflecting region 130 is zero, and a distance between the light-homogenizing region 160 and the coupling-out region 140 is zero.

In one embodiment, referring to FIG. 5, the light-homogenizing region 160 is disposed between the deflecting region 130 and the coupling-out region 140. The light-homogenizing region 160 is spaced apart from the deflecting region 130 and the coupling-out region 140. A distance between the light-homogenizing region 160 and the deflecting region 130 is less than or equal to 40mm, and a distance between the light-homogenizing region 160 and the coupling-out region 140 is less than or equal to 40mm.

When an incident light 1 and an incident light 2 at different angles propagate between the deflecting region 130 and the coupling-out region 140, propagation directions of the incident light 1 and the incident light 2 are different, as shown in FIG. 5b/5c. The same light-homogenizing regions 160 positioned at different positions may have different impact on lights. Different light-homogenizing regions 160 positioned at different positions, may have the same impact on lights. As shown in FIG. 5b/5c, size and position of the light-homogenizing regions 160 are different, but the light-homogenizing regions 160 exert the same effect for both the incident light 1 and the incident light 2.Therefore, the light-homogenizing region 160 in FIG. 5c, which has a smaller processing area, is less costly than the light-homogenizing region 160 in FIG. 5b.

In one embodiment, a distance between the light-homogenizing region 160 and the deflecting region 130 ranges from 10mm to 30mm, a distance between the light-homogenizing region 160 and the coupling-out region 140 ranges from 10mm to 30mm.

In one embodiment, the distance between the light-homogenizing region 160 and the deflecting region 130 is 10mm, and the distance between the light-homogenizing region 160 and the coupling-out region 140 is 10mm.

In one embodiment, the distance between the light-homogenizing region 160 and the deflecting region 130 is 20mm, and the distance between the light-homogenizing region 160 and the coupling-out region 140 is 20mm.

In one embodiment, the distance between the light-homogenizing region 160 and the deflecting region 130 is 30mm, and the distance between the light-homogenizing region 160 and the coupling-out region 140 is 30mm.

It should be understood that the distance between the light-homogenizing region 160 and the deflecting region 130, as well as the distance between the light-homogenizing region 160 and the coupling-out region 140 are not limited to the above values, but may also be other values, which are not limited herein.

In one embodiment, referring to FIG. 6, the light-homogenizing region 160 is disposed between the deflecting region 130 and the coupling-out region 140. The light-homogenizing region 160 is adjacent to the deflecting region 130, that is, a distance between the light-homogenizing region 160 and the deflecting region 130 is zero. The light-homogenizing region 160 is spaced apart from the coupling-out region 140, and a distance between the light-homogenizing region 160 and the coupling-out region 140 is less than or equal to 40mm.

In one embodiment, the distance between the light-homogenizing region 160 and the coupling-out region 140 ranges from 10mm to 30mm. In one embodiment, the distance between the light-homogenizing region 160 and the coupling-out region 140 is 10mm. In one embodiment, the distance between the light-homogenizing region 160 and the coupling-out region 140 is 20mm. In one embodiment, the distance between the light-homogenizing region 160 and the coupling-out region 140 is 30mm. It should be understood that the distance between the light-homogenizing region 160 and the coupling-out region 140 is not limited to the above values, but may also be other values, which are not limited herein.

In one embodiment, referring to FIG. 7, the light-homogenizing region 160 is disposed between the deflecting region 130 and the coupling-out region 140. The light-homogenizing region 160 is adjacent to the coupling-out region 140, that is, a distance between the light-homogenizing region 160 and the coupling-out region 140 is zero. The light-homogenizing region 160 is spaced apart from the deflecting region 130, and a distance between the light-homogenizing region 160 and the deflecting region 130 is less than or equal to 40mm.

In one embodiment, the distance between the light-homogenizing region 160 and the deflecting region 130 ranges from 10mm to 30mm. In one embodiment, the distance between the light-homogenizing region 160 and the deflecting region 130 is 10mm. In one embodiment, the distance between the light-homogenizing region 160 and the deflecting region 130 is 20mm. In one embodiment, the distance between the light-homogenizing region 160 and the deflecting region 130 is 30mm. It should be understood that the distance between the light-homogenizing region 160 and the deflecting region 130 is not limited to the above values, but may also be other values, which are not limited herein.

In one embodiment, at least one of the light-homogenizing region 160, the coupling-in region 120, the deflecting region 130, and the coupling-out region 140 is arranged on a different side from remaining others.

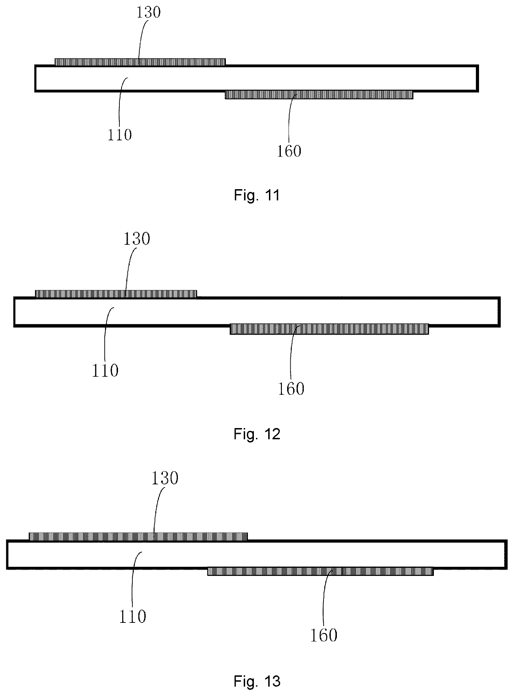

In one embodiment, referring to FIG. 11, the light-homogenizing region 160 is disposed between the deflecting region 130 and the coupling-out region 140. The light-homogenizing region 160 is adjacent to the deflecting region 130 and the coupling-out region 140 in an axial direction. That is, a distance between the light-homogenizing region 160 and the deflecting region 130 is zero, and a distance between the light-homogenizing region 160 and the coupling-out region 140 is zero.

In one embodiment, referring to FIG. 12, the light-homogenizing region 160 is disposed between the deflecting region 130 and the coupling-out region 140. The light-homogenizing region 160 is spaced apart from the deflecting region 130 and the coupling-out region 140 in an axial direction. A distance between the light-homogenizing region 160 and the deflecting region 130 is less than or equal to 40mm, and a distance between the light-homogenizing region 160 and the coupling-out region 140 is less than or equal to 40mm.

In one embodiment, the distance between the light-homogenizing region 160 and the deflecting region 130 ranges from 10mm to 30mm, and the distance between the light-homogenizing region 160 and the coupling-out region 140 ranges from 10mm to 30mm.

In one embodiment, the distance between the light-homogenizing region 160 and the deflecting region 130 is 10mm, and the distance between the light-homogenizing region 160 and the coupling-out region 140 is 10mm.

In one embodiment, the distance between the light-homogenizing region 160 and the deflecting region 130 is 20mm, and the distance between the light-homogenizing region 160 and the coupling-out region 140 is 20mm.

In one embodiment, the distance between the light-homogenizing region 160 and the deflecting region 130 is 30mm, and the distance between the light-homogenizing region 160 and the coupling-out region 140 is 30mm.

It should be understood that the distance between the light-homogenizing region 160 and the deflecting region 130, as well as the distance between the light-homogenizing region 160 and the coupling-out region 140 are not limited to the above values, but may also be other values, which are not limited herein.

In one embodiment, the light-homogenizing region 160 is disposed between the deflecting region 130 and the coupling-out region 140. The light-homogenizing region 160 is adjacent to the deflecting region 130 in an axial direction, that is, a distance between the light-homogenizing region 160 and the deflecting region 130 in the axial direction is zero. The light-homogenizing region 160 is spaced apart from the coupling-out region 140 in the axial direction, and a distance between the light-homogenizing region 160 and the coupling-out region 140 is less than or equal to 40mm.

In one embodiment, the distance between the light-homogenizing region 160 and the coupling-out region 140 ranges from 10mm to 30mm. In one embodiment, the distance between the light-homogenizing region 160 and the coupling-out region 140 is 10mm. In one embodiment, the distance between the light-homogenizing region 160 and the coupling-out region 140 is 20mm. In one embodiment, the distance between the light-homogenizing region 160 and the coupling-out region 140 is 30mm. It should be understood that the distance between the light-homogenizing region 160 and the coupling-out region 140 is not limited to the above values, but may also be other values, which are not limited herein.

In one embodiment, the light-homogenizing region 160 is disposed between the deflecting region 130 and the coupling-out region 140. The light-homogenizing region 160 is adjacent to the coupling-out region 140 in the axial direction, that is, a distance between the light-homogenizing region 160 and the coupling-out region 140 in the axial direction is zero. The light-homogenizing region 160 is spaced apart from the deflecting region 130 in the axial direction, and a distance between the light-homogenizing region 160 and the deflecting region 130 is less than or equal to 40mm.

In one embodiment, the distance between the light-homogenizing region 160 and the deflecting region 130 ranges from 10mm to 30mm. In one embodiment, the distance between the light-homogenizing region 160 and the deflecting region 130 is 10mm. In one embodiment, the distance between the light-homogenizing region 160 and the deflecting region 130 is 20mm. In one embodiment, the distance between the light-homogenizing region 160 and the deflecting region 130 is 30mm. It should be understood that the distance between the light-homogenizing region 160 and the deflecting region 130 is not limited to the above values, but may also be other values, which are not limited herein.

In one embodiment, referring to FIG. 13, the light-homogenizing region 160 is disposed between the deflecting region 130 and the coupling-out region 140, and the light-homogenizing region 160 overlaps with at least one of the deflecting region 130 and the coupling-out region 140 in the axial direction.

In one embodiment, the light-homogenizing region 160 overlaps with the deflecting region 130.

In one embodiment, the light-homogenizing region 160 overlaps with the coupling-out region 140.

In one embodiment, the light-homogenizing region 160 overlaps with the deflecting region 130 and the coupling-out region 140.

In one embodiment, a length of an overlap between the light-homogenizing region 160 and the deflecting region 130 ranges from 0mm to 100mm. A length of an overlap between the light-homogenizing region 160 and the coupling-out region 140 ranges from 0mm to 100mm. A length of an overlap between the light-homogenizing region 160 and the deflecting region 130, a length of an overlap between the light-homogenizing region 160 and the coupling-out region 140, both range from 0mm to 100mm.

In one embodiment, the length of an overlap between the light-homogenizing region 160 and the deflecting region 130 is 50mm. The length of an overlap between the light-homogenizing region 160 and the coupling-out region 140 is 50mm. A length of an overlap between the light-homogenizing region 160 and the deflecting region 130, a length of an overlap between the light-homogenizing region 160 and the coupling-out region 140, are both 50mm. It should be understood that the above-described overlap length is not limited to the above-described values, but may also be other values, which are not limited herein.

The present embodiment also provides an optical apparatus (not shown in the drawings, the same below), including a micro-image source and the above-mentioned diffraction optical waveguide structure 100. Since the diffraction optical waveguide structure 100 has been described in detail above, it will not be described in detail herein.

The present embodiment also provides a near-eye display device (not shown in the drawings, the same below), including the above-mentioned optical apparatus.

In summary, the present embodiment provides a diffraction optical waveguide structure 100. The diffraction optical waveguide structure 100 includes a light-guiding layer 110, a coupling-in region 120, a deflecting region 130 and a coupling-out region 140. The coupling-in region 120, the deflecting region 130 and the coupling-out region 140 are all disposed on the light-guiding layer 110, and are sequentially arranged along a direction of an optical path. The coupling-in region 120, the deflecting region 130 and the coupling-out region 140 are all configured with a first diffractive microstructure layer 150. The diffraction optical waveguide structure 100 further includes a light-homogenizing region 160, the light-homogenizing region 160 is arranged between the deflecting region 130 and the coupling-out region 140, the light-homogenizing region 160 is configured with a second diffractive microstructure layer 170, the second diffractive microstructure layer 170 is configured to spatially redistribute energy of lights, in order to enhance the uniformity and brightness of the lights emitted from the coupling-out region 140. The present embodiment also provides an optical apparatus, including a micro-image source and the above-mentioned diffraction optical waveguide structure 100. The present embodiment further provides a near-eye display device, including the above-mentioned optical apparatus. The diffraction optical waveguide structure 100, the optical apparatus and the near-eye display device provided in the present embodiment, are configured with a light-homogenizing region 160 arranged between the deflecting region 130 and the coupling-out region 140. Lights output from the deflecting region 130 may completely or partially pass through the light-homogenizing region 160 before entering the coupling-out region 140, and the second diffractive microstructure layer 170 disposed in the light-homogenizing region 160 is configured to spatially redistribute energy of lights to improve energy of outgoing lights propagated from the coupling-out region 140, thus improving uniformity of waveguide display and improving overall brightness, resulting in a better display effect.

The above are only preferred embodiments of the present disclosure, and are not intended to limit the present disclosure. Any modification, equivalent substitution and improvement made within the spirit and principle of the present disclosure should be included in the protection scope of the present disclosure.

## Claims

1. A diffraction optical waveguide structure (100), comprising:
a light-guiding layer (110), and a coupling-in region (120), a deflecting region (130), and a coupling-out region (140) all disposed on the light-guiding layer (110) and sequentially arranged along a direction of an optical path, the coupling-in region (120), the deflecting region (130) and the coupling-out region (140) are all configured with a first diffractive microstructure layer (150);
the diffraction optical waveguide structure (100) further comprises light-homogenizing region (160), the light-homogenizing region (160) is arranged between the deflecting region (130) and the coupling-out region (140), the light-homogenizing region (160) is configured with a second diffractive microstructure layer (170), the second diffractive microstructure layer (170) is configured to spatially redistribute energy of lights to enhance uniformity and brightness of the lights emitted from the coupling-out region (140).

2. The diffraction optical waveguide structure (100) according to claim 1, wherein the light-homogenizing region (160) is a region enclosed by straight edges; or, the light-homogenizing region (160) is a region enclosed by curved edges.

3. The diffraction optical waveguide structure (100) according to claim 1, wherein the light-homogenizing region (160) includes more than one sub-light-homogenizing region (161), more than one sub-light-homogenizing region (161) is disposed at intervals, and a distance between two adjacent sub-light-homogenizing regions (161) is less than or equal to 30mm.

4. The diffraction optical waveguide structure (100) according to claim 1, wherein the light-homogenizing region (160) is configured with one or more hole regions (162), a hole size of the hole region (162) is less than or equal to 30mm.

5. The diffraction optical waveguide structure (100) according to any one of claims 1 to 4, wherein the light-homogenizing region (160) is arranged on the same side as the coupling-in region (120), the deflecting region (130) , and the coupling-out region (140).

6. The diffraction optical waveguide structure (100) according to claim 5, wherein the light-homogenizing region (160) is disposed between the deflecting region (130) and the coupling-out region (140), the light-homogenizing region (160) is adjacent to the deflecting region (130) and the coupling-out region (140);
or, the light-homogenizing region (160) is disposed between the deflecting region (130) and the coupling-out region (140), the light-homogenizing region (160) is spaced apart from the deflecting region (130) and the coupling-out region (140), a distance between the light-homogenizing region (160) and the deflecting region (130) is less than or equal to 40mm, and a distance between the light-homogenizing region (160) and the coupling-out region (140) is less than or equal to 40mm;
or, the light-homogenizing region (160) is disposed between the deflecting region (130) and the coupling-out region (140), the light-homogenizing region (160) is adjacent to the deflecting region (130), the light-homogenizing region (160) is spaced apart from the coupling-out region (140), and a distance between the light-homogenizing region (160) and the coupling-out region (140) is less than or equal to 40mm;
or, the light-homogenizing region (160) is disposed between the deflecting region (130) and the coupling-out region (140), the light-homogenizing region (160) is adjacent to the coupling-out region (140), the light-homogenizing region (160) is spaced apart from the deflecting region (130), a distance between the light-homogenizing region (160) and the deflecting region (130) is less than or equal to 40mm.

7. The diffraction optical waveguide structure (100) according to any one of claims 1 to 4, wherein at least one of the light-homogenizing region (160), the coupling-in region (120), the deflecting region (130), and the coupling-out region (140) is arranged on a different side from remaining others.

8. The diffraction optical waveguide structure (100) according to claim 7, wherein the light-homogenizing region (160) is disposed between the deflecting region (130) and the coupling-out region (140), the light-homogenizing region (160) is adjacent to the deflecting region (130) and the coupling-out region (140) in an axial direction;
or, the light-homogenizing region (160) is disposed between the deflecting region (130) and the coupling-out region (140), the light-homogenizing region (160) is spaced apart from the deflecting region (130) and the coupling-out region (140) in an axial direction, a distance between the light-homogenizing region (160) and the deflecting region (130) is less than or equal to 40mm, and a distance between the light-homogenizing region (160) and the coupling-out region (140) is less than or equal to 40mm;
or, the light-homogenizing region (160) is disposed between the deflecting region (130) and the coupling-out region (140), the light-homogenizing region (160) is adjacent to the deflecting region (130) in an axial direction, the light-homogenizing region (160) is spaced apart from the coupling-out region (140) in an axial direction, and a distance between the light-homogenizing region (160) and the coupling-out region (140) is less than or equal to 40mm;
or, the light-homogenizing region (160) is disposed between the deflecting region (130) and the coupling-out region (140), the light-homogenizing region (160) is adjacent to the coupling-out region (140) in an axial direction, the light-homogenizing region (160) is spaced apart from the deflecting region (130) in an axial direction, and a distance between the light-homogenizing region (160) and the deflecting region (130) is less than or equal to 40mm;
or, the light-homogenizing region (160) is disposed between the deflecting region (130) and the coupling-out region (140), and the light-homogenizing region (160) overlaps with at least one of the deflecting region (130) and the coupling-out region (140) in an axial direction.

9. The diffraction optical waveguide structure (100) according to claim 1, wherein the light-homogenizing region (160) comprises more than one sub-light-homogenizing regions (161), the second diffractive microstructure layer (170) in each the sub-light-homogenizing region (161) has different duty cycles and groove depths.

10. The diffraction optical waveguide structure (100) according to claim 1, wherein the light-homogenizing region (160) is configured with one or more hole regions (162), a second diffractive microstructure layer (170) is configured in a region other than the hole region (162) of the light-homogenizing region (160).

11. The diffraction optical waveguide structure (100) according to claim 1, wherein the light-homogenizing region (160) is configured with more than one hole region (162).

12. The diffraction optical waveguide structure (100) according to claim 1, wherein the light-homogenizing region (160) is disposed between the deflecting region (130) and the coupling-out region (140), a distance between the light-homogenizing region (160) and the deflecting region (130) is greater than a distance between the light-homogenizing region (160) and the coupling-out region (140).

13. The diffraction optical waveguide structure (100) according to claim 1, wherein the light-homogenizing region (160) is disposed between the deflecting region (130) and the coupling-out region (140), a distance between the light-homogenizing region (160) and the deflecting region (130) ranges from 10mm to 30mm, a distance between the light-homogenizing region (160) and the coupling-out region (140) ranges from 10mm to 30mm.

14. An optical apparatus, comprising: a micro-image source, and a diffraction optical waveguide structure (100) according to any one of claims 1 to 13.

15. A near-eye display device, comprising: an optical apparatus according to claim 14.
